**Europäisches Patentamt**

**European Patent Office**

**Office européen des brevets**

(19)

(11) Veröffentlichungsnummer : **0 052 337**
**B1**

(12) **EUROPÄISCHE PATENTSCHRIFT**

(45) Veröffentlichungstag der Patentschrift :
**11.04.84**

(21) Anmeldenummer : **81109616.3**

(22) Anmeldetag : **11.11.81**

(51) Int. Cl.³ : **C 08 B 11/20, C 08 B 31/08,
B 04 B 1/20**

(54) **Reinigung von Cellulose- und Stärkeethern.**

(30) Priorität : **19.11.80 DE 3043621**

(43) Veröffentlichungstag der Anmeldung :
**26.05.82 Patentblatt 82/21**

(45) Bekanntmachung des Hinweises auf die Patenterteilung : **11.04.84 Patentblatt 84/15**

(84) Benannte Vertragsstaaten :
**DE FR IT NL SE**

(56) Entgegenhaltungen :
**DE-A- 1 532 683
DE-A- 2 304 603
DE-C-   823 119
FR-A- 1 298 961**

(73) Patentinhaber : **Wolff Walsrode Aktiengesellschaft
Postfach
D-3030 Walsrode 1 (DE)**

**BAYER AG
Konzernverwaltung RP Patentabteilung
D-5090 Leverkusen 1 Bayerwerk (DE)**

(72) Erfinder : **Bernert, Claus-Rüdiger, Dr.
Radewiesen 23
D-3030 Walsrode (DE)**
Erfinder : **Kords, Christian, Dipl.-Ing.
Ahornring 29
D-3030 Walsrode (DE)**
Erfinder : **Redeker, Detmar, Dr.
Roggendorfstrasse 53
D-5000 Köln 80 (DE)**

(74) Vertreter : **Kutzenberger, Helga, Dr. et al
c/o Bayer AG Zentralbereich Patente Marken und
Lizenzen
D-5090 Leverkusen 1, Bayerwerk (DE)**

Reinigung von Cellulose- und Stärkeethern

Gegenstand der Erfindung ist ein Verfahren zur kontinuierlichen Reinigung und Aufarbeitung von Cellulose- und Stärkeethern auf einer Vollmantelsiebzentrifuge.

Cellulose- und Stärkeether, wie z. B. Natrium-Carboxymethylcellulose, Hydroxyethylcellulose, Methylcellulose, Methylhydroxypropylcellulose, Carboxymethylstärke und Ethylhydroxyethylcellulose werden hergestellt, indem die Cellulose bzw. Stärke mit Natronlauge behandelt und zur Veretherung mit einem oder mehreren Verbindungen wie Monochloressigsäure, Ethylenoxid, Methylchlorid, Propylenoxid oder Ethylchlorid bei erhöhter Temperatur umgesetzt wird.

Als Nebenprodukte fallen dabei Salze an wie z. B. Natriumchlorid, Natriumglykolat oder Natriumacetat, die aus anwendungstechnischen Gründen aus dem Cellulose- bzw. Stärkeether entfernt werden müssen.

Die Reinigung erfolgt üblicherweise mit heißem Wasser, wenn das Produkt in diesem Medium flockt, wie Methylcellulose und viele ihrer Mischether. Tritt diese Flockung in Wasser bei erhöhter Temperatur nicht ein, wie bei Carboxymethylcellulose, Carboxymethylstärke, Hydroxyethylcellulose und unter Verwendung großer Epoxidmengen hergestellter Methylcellulose, so muß dem Wasser eine mit Wasser mischbare organische Komponente zugesetzt werden, z. B. Methanol, Ethanol oder Isopropanol. Die Konzentration des Alkohols wird so eingestellt, daß eine maximale Salzlöslichkeit gewährleistet ist und das Reaktionsprodukt nicht gelöst wird, d. h. je nach Art des Produktes und der Temperatur zwischen 45 und 75 Gew.-%.

Die bisher üblichen Reinigungsverfahren (DOS 1.801.553, DOS 2.457.187) gehen meist von dem feuchten Rohprodukt aus, das mit einem geeigneten Alkohol-Wasser-Gemisch oder heißem Wasser angemaischt und nach unterschiedlicher Verweilzeit mit Zentrifugen, Dekantern, Trommel-Teller- oder Bandfiltern abgetrennt wird. Alternativ besteht nach DT-PS 2.017.454 die Möglichkeit, das getrocknete noch salzhaltige Produkt in Granulatform in einem Gegenstromextraktor zu reinigen. Während das letztere Verfahren den Nachteil aufweist, daß die erforderliche Zwischentrocknung energieaufwendig ist, stören bei der Reinigung des Feuchtgutes im Chargenbetrieb (US-PS 3 498 971) die je nach Vorbehandlung mehr oder weniger langen Extraktionszeiten und bei der kontinuierlichen Extraktion der hohe Reinigungsmittelbedarf.

Das erfindungsgemäße Verfahren vermeidet Zwischentrocknungen und Anmaischungen und führt in kontinuierlicher, kombinierter Feststoffabtrennung und Extraktion direkt zu einem hochgereinigten Cellulose- bzw. Stärkeether.

Gegenstand der Erfindung ist ein kontinuierliches Verfahren zur Reinigung und Isolierung von Cellulose- bzw. Stärkeethersuspensionen durch Entfernung des Suspendiermittels, Extraktion des Reaktionsproduktes mit Reinigungsmittel und abzentrifugieren des Reinigungsmittels, das dadurch gekennzeichnet ist, daß die Entfernung des Suspendiermittels, das Auswaschen mit dem Reinigungsmittel und das Isolieren und Austragen des Cellulose- bzw. Stärkeethers mit Hilfe einer Vollmantelsiebzentrifuge erfolgen.

Es ist bekannt, Vollmanteldekanter zur Abtrennung der Cellulose- bzw. Stärkeether von ihrem Suspendiermedium nach der Veretherungs- oder der Extraktionsstufe einzusetzen. Beispielsweise kann rohe Methylcellulose nach Suspendierung in heißem Wasser über einen Dekanter von ihrer Mutterlauge abgetrennt werden. Allerdings ist für eine einmalige Reinigung mindestens die 20-fache Menge an Reinigungsmedium — bezogen auf getrocknetes, gereinigtes Produkt — erforderlich. Während dies bei Einsatz von Wasser noch keine wesentliche Kostensteigerung und Umweltbelastung mit sich bringt, ist bei Verwendung von z. B. Alkohol-Wassergemischen eine Destillation erforderlich. Es wird daher der Einsatz einer möglichst geringen Menge an Reinigungsmedium angestrebt. Durch den erfindungsgemäßen Einsatz von Vollmantelsiebzentrifugen gelingt dies.

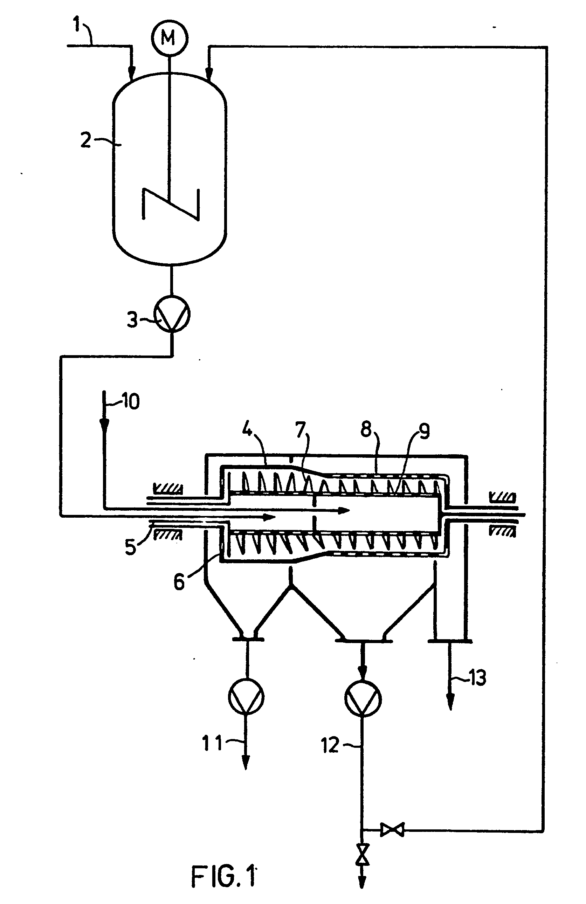

Als Vollmantelsiebzentrifuge (Abb. 1) wird überlicherweise ein Aggregat bezeichnet, das im hinteren Teil aus einem Vollmanteldekanter (4) besteht, auf den man die Produktsuspension (1) in üblicher Weise aus einer Vorlage (2) über eine Pumpe (3) und ein zentrales Rohr (5) aufgibt. Das abgetrennte Suspendiermedium (11) geht über ein Wehr (6) nach hinten ab, während die zentrale Schnecke (7) das Feuchtgut nach vorn fördert. Im vorderen Teil besteht der rotierende Mantel aus einer Siebzone (8), deren Durchmesser gegenüber dem des hinteren Mantels (4) geringer ist, so daß der Übergang von Mutterlauge in die Siebzone vermieden wird. Über eine Anzahl von Düsen (9) entlang der Schneckenwindungen kann im Bereich der Siebzone das Waschmedium (10) gleichmäßig dosiert werden. Die vorderste Zone ist frei von Düsen, um eine Nachentfeuchtung zu gewährleisten. Das verunreinigte Waschmedium (12) wird entweder ausgetragen oder im Kreis geführt. Das gereinigte Produkt (13) wird wie üblich aufgearbeitet.

Von besonderem Vorteil bei Vorhandensein einer Extraktionsstufe ist, daß das zum Auswaschen verwendete Reinigungsmedium, das in der kurzen Exraktionszeit im Siebbereich nur geringe Salzmengen aufnehmen kann und über den Siebbereich Durchschlag aus Celluloseether- bzw. Stärkeetherpartikeln erhält, praktisch im Gegenstrom als Reinigungsmedium zurück in die Extraktionsstufe gehen kann. Hierauf beruht im wesentlichen das günstige Verhältnis vom Feststoff zum Reinigungsmittel bei der Reinigung, das zwischen 1 : 5 und 1 : 10 liegt.

Nach dem erfindungsgemäßen Verfahren können Cellulose- oder Stärkeethersuspensionen von in heißem Wasser leicht flockenden Typen, wie z. B. Methylcellulose, Methylhydroxyethylcellulose, Methylhydroxypropyl-cellulose oder Ethylhydroxyethylcellulose oder in heißem Wasser schwerer flockenden Typen, wie z. B. Methyl-carboxymethylcellulose oder Methylcellulosen mit hohem Gehalt an Hydroxyethyl- bzw. Hydroxypropylgruppen sowie in heißem Wasser nicht flockenden Typen, wie z. B. Hydroxyethylcellulose, Na-Carboxymethylcellulose, Na-Carboxymethylstärke oder Hydroxypropylstärke, aufgearbeitet werden. Vorzugsweise werden die letztgenannten Typen nach dem erfindungsgemäßen Verfahren aufgearbeitet.

Als Suspendier- bzw. Reinigungsmittel werden die für den jeweiligen Cellulose- bzw. Stärkeether bekannten Mittel eingesetzt.

Besonders bevorzugt wird das erfindungsgemäße Verfahren zur Aufarbeitung von Cellulose-bzw. Stärkeethersuspensionen direkt nach der Veretherung eingesetzt, wie z. B. zur Aufarbeitung von Hydroxyethylcellulose, Na-Carboxymethylcellulose oder Na-Carboxymethylstärke in Alkohol/Wasser-Gemischen wie in Isopropanol-Wasser-Gemischen, wobei das Reinigungs- bzw. Extraktionsmittel nicht mit dem Suspendiermittel identisch ist.

Bislang war es erforderlich, wegen des unzureichenden Lösevermögens des Suspendiermediums für die Begleitsalze Natriumchlorid, Natriumglykolat und Natriumacetat derartige Suspensionen zunächst einer Feststoffabtrennung zu unterziehen, das Restlösungsmittel zu entfernen und das Rohprodukt in einem Alkohol-Wasser-Gemisch von ausreichendem Salzlösevermögen, z. B. wäßrigem Methanol, zu dispergieren und nach ausreichender Extraktionszeit erneut abzutrennen. Nach dem erfindungsgemäßen Verfahren wird die Suspension des Celluloseethers direkt nach der Veretherung im Vollmanteldekanterteil der Vollmantelsiebzentrifuge vom Suspendiermittel befreit, welches nach hinten abläuft und ohne Destillation für die Veretherung wieder eingesetzt werden kann. Im Siebteil wird das Rohprodukt dann mit dem Reinigungsmedium bedüst, welches durch das Sieb austritt und der Aufarbeitung zuläuft. Nach überraschend kurzer Extraktionszeit erhält man ein hochgereinigtes Produkt, das für die bekannten Zwecke verwendet werden kann.

Beispiel 1

Methylhydroxypropylcellulose (HPMC) in einer wäßrigen Suspension von 96 °C und 8 % Feststoffgehalt — bezogen auf HPMC — wird in einer Menge von 750 l/h auf eine Vollmantelsiebzentrifuge von 150 mm Trommeldurchmesser und einem Beschleunigungswert von 790 g gespeist und mit 300 l/h Heißwasser von 96 °C auf dem Siebteil gewaschen. Die resultierende HPMC weist einen NaCl-Gehalt von 0,27 % auf.

Beispiel 2

Eine neutralisierte Suspension von 10 % Hydroxypropylcellulose in einem Gemisch aus 72 % Ethanol und 28 % Wasser wird in einer Menge von 700 l/h auf die in Beispiel 1 beschriebene Vollmantelsiebzentrifuge gegeben und mit 350 l/h des obigen Alkoholgemisches auf dem Siebteil gewaschen. Die resultierende Hydroxypropylcellulose weist einen Gehalt von 0,2 % Natriumacetat auf.

Beispiel 3

Eine neutralisierte Suspension von 10 % Hydroxyethylcellulose in einem Gemisch aus 63 % Isopropanol und 27 % Wasser wird in einer Menge von 750 l/h auf die in Beispiel 1 beschriebene Vollmantelsiebzentrifuge gegeben. Mit 400 l/h des obigen Alkoholgemisches erfolgt die Wäsche auf dem Siebteil ; der Natriumacetatgehalt des resultierenden gereinigten Produktes liegt bei 0,15 %.

Beispiel 4

Die neutralisierte Suspension von 10 % Na-Carboxymethylcellulose (CMC) in einem Gemisch aus 65 % Methanol und 35 % Wasser wird in einer Menge von 750 l/h auf die in Beispiel 1 beschriebene Vollmantelsiebzentrifuge gegeben. Mit 400 l/h des obigen Alkoholgemisches auf dem Sieb nachgewaschen, resultiert eine reine CMC mit einem Gehalt von 0,23 % Natriumchlorid und 0,11 % Natriumglykolat ; Natriumacetat liegt nur in Spuren vor.

Beispiel 5

Beispiel 4 wird wiederholt mit einer Suspension von 10 % Na-Carboxymethylstärke in einem Gemisch aus 75 % Ethanol und 25 % Wasser. Nach der Wäsche werden 0,12 % Natriumchlorid, 0,09 % Natriumglykolat und Spuren Natriumacetat in der Carboxymethylstärke gefunden.

Beispiel 6

Die aus der Veretherung stammende Suspension von 10 % Carboxymethylcellulose (CMC) in dem Gemisch aus 86 % Isopropanol und 14 % Wasser wird in einer Menge von 700 l/h auf die im Beispiel 1 beschriebene Vollmantelsiebzentrifuge gegeben, das Suspendiermedium auf dem Vollmanteldekanterteil der Zentrifuge abgetrennt und der Veretherungsstufe wieder zugeführt. Mit 490 l/h läuft dem Siebteil der Zentrifuge ein Gemisch aus 70 % Methanol und 30 % Wasser zu. Die abgetrennte und getrocknete reine CMC weist einen Natriumchloridgehalt von 0,38 % auf.

Beispiel 7

Beispiel 6 wird wiederholt unter Verwendung von 490 l/h eines Waschmediums aus 25 % Isopropanol, 45 % Methanol und 30 % Wasser. Das Produkt enthält von 0,33 % Natriumchlorid.

Beispiel 8

Beispiel 6 wird wiederholt unter Einsatz der aus der Veretherung stammenden Suspension von 10 % Carboxymethylstärke im Gemisch aus 89 % Isopropanol und 11 % Wasser. Nach der Wäsche enthält das Produkt nur noch 0,18 % Natriumchlorid.

**Ansprüche**

1. Ein kontinuierliches Verfahren zur Reinigung und Isolierung von Cellulose- oder Stärkeethersuspensionen durch Entfernung des Suspendiermittels, Extraktion des Reaktionsproduktes mit Reinigungsmittel und Abzentrifugieren des Reinigungsmittels, dadurch gekennzeichnet, daß die Entfernung des Suspendiermittels, das Auswaschen mit dem Reinigungsmittel und das Isolieren und Austragen des Cellulose- oder Stärkeethers mit Hilfe einer Vollmantelsiebzentrifuge erfolgt.

2. Verfahren nach Anspruch 1, dadurch gekennzeichnet, daß bei der Reinigung durch Extraktion das Verhältnis von Feststoff zu Reinigungsmittel im Bereich von 1 : 5 bis 1 : 10 liegt.

3. Verfahren nach Anspruch 1 oder 2, dadurch gekennzeichnet, daß als Reinigungsmittel Wasser oder Gemische eines niedrigen Alkohols und Wasser verwendet wird.

4. Verfahren nach Ansprüchen 1-3, dadurch gekennzeichnet, daß die Cellulose- oder Stärkeethersuspension direkt nach der Veretherung in die Vollmantelsiebzentrifuge geleitet wird.

5. Verfahren nach Ansprüchen 1-4, dadurch gekennzeichnet, daß die Celluloseether- oder Stärkeethersuspension 1 aus einer Vorlage 2 über eine Pumpe 3 und ein zentrales Rohr 5 in den hinteren Teil des Vollmanteldekanters 4 der Vollmantelsiebzentrifuge aufgegeben wird, von wo das abgetrennte Suspendiermittel 11 über ein Wehr 6 nach hinten abläuft, während die zentrale Schnecke 7 das feuchte Etherprodukt nach vorne in eine Siebzone 8 fördert, wo es über eine Anzahl Düsen 9 entlang den Schneckenwindungen mit Reinigungsmittel 10 gleichmäßig beschickt und als gereinigtes Produkt 13 wie üblich ausgetragen wird, wobei das verunreinigte Reinigungsmittel 12 entweder im Kreis geführt oder auch ausgetragen wird.

**Claims**

1. A continuous process for the purification and isolation of cellulose suspensions or starch ether suspensions by removing the suspending agent, extracting the reaction product with a purifying agent and centrifuging off the purifying agent, characterised in that removal of the suspending agent, washing out with the purifying agent and isolation and discharge of the cellulose ether or starch ether are carried out with the aid of a solid jacket sieve centrifuge.

2. Process according to Claim 1, characterised in that in the purification by extraction the ratio of solid to purifying agent is in the region of 1 : 5 to 1 : 10.

3. Process according to Claim 1 or 2, characterised in that the purifying agent used is water or mixtures of a lower alcohol and water.

4. Process according to Claims 1-3, characterised in that the cellulose ether suspension or starch ether suspension is introduced into the solid jacket sieve centrifuge directly after etherification.

5. Process according to Claims 1-4, characterised in that the cellulose ether suspension or starch ether suspension 1 is fed from a storage tank 2 via a pump 3 and a central pipe 5 into the rear part of the solid jacket decanter 4 of the solid jacket sieve centrifuge, from where the suspending agent 11 separated off flows off rearwards via a baffle 6 while the central screw 7 conveys the moist ether product frontwards into a sieve zone 8 where it is uniformly sprayed with purifying agent 10 via a number of nozzles 9 along the screw threads and is discharged in the customary manner as a purified product 13, the contaminated purifying agent 12 either being recirculated or discharged.

**Revendications**

1. Procédé continu pour purifier et isoler des suspensions d'éthers de cellulose ou d'amidon par élimination de l'agent de mise en suspension, extraction du produit réactionnel avec un agent épurateur et élimination de ce dernier par centrifugation, caractérisé en ce que l'élimination de l'agent de mise en suspension, le lavage avec l'agent épurateur et l'isolement et l'évacuation de l'éther de cellulose ou d'amidon sont effectués à l'aide d'une centrifugeuse à tamis à carter plein.

2. Procédé suivant la revendication 1, caractérisé en ce que le rapport de la matière solide à l'agent épurateur, lors de la purification par extraction, se situe dans l'intervalle de 1 : 5 à 1 : 10.

3. Procédé suivant la revendication 1 ou 2, caractérisé en ce qu'on utilise comme agent épurateur l'eau ou des mélanges d'un alcool inférieur et d'eau.

4. Procédé suivant les revendications 1 à 3, caractérisé en ce que la suspension d'éther de cellulose ou d'éther d'amidon est introduite dans la centrifugeuse à tamis à carter plein immédiatement après l'éthérification.

5. Procédé suivant les revendications 1 à 4, caractérisé en ce que la suspension (1) d'éther de cellulose ou d'éther d'amidon est chargée depuis un récipient (2) par une pompe (3) et un tube central (5) dans la partie postérieure du décanteur (4) à carter plein de la centrifugeuse à tamis à carter plein d'où l'agent de mise en suspension (11) séparé s'écoule vers l'arrière par un déversoir (6), tandis que la vis sans fin centrale (7) transporte l'éther humide constituant le produit vers l'avant dans une zone de tamisage (8) où il est uniformément mis en contact, par plusieurs ajutages (9) se trouvant le long des spires de la vis sans fin, avec l'agent épurateur (10) et est évacué de façon classique en tant que produit purifié (13), l'agent épurateur (12) contaminé étant recyclé ou également évacué.

FIG.1